# EUROPEAN PATENT SPECIFICATION

(11) **EP 2 542 707 B1**
(45) Date of publication and mention of the grant of the patent: **11.05.2016**
(21) Application number: 11719368.0
(22) Date of filing: 04.03.2011
(51) Int. Cl.: C21D 1/10, C21D 1/42, C21D 9/34, C21D 9/40

(54) **METHOD AND DEVICE FOR LOCALIZED INDUCTION HARDENING OF CIRCULAR MECHANICAL COMPONENT PARTS OF LARGE-SIZE, IN PARTICULAR RINGS FOR ROLLING BEARINGS**
VERFAHREN UND VORRICHTUNG FÜR LOKALISIERTE INDUKTIONSHÄRTUNG VON GROSSEN KREISFÖRMIGEN MECHANISCHEN KOMPONENTEN , IM BESONDEREN RINGE FÜR WÄLZLAGER
PROCÉDÉ ET DISPOSITIF POUR DURCISSEMENT PAR INDUCTION LOCALISÉE DE PARTIES CONSTITUTIVES MÉCANIQUES CIRCULAIRES DE GRANDE TAILLE, EN PARTICULIER DES BAGUES POUR ROULEMENTS À BILLES

(30) Priority: 05.03.2010 IT TO20100173
(43) Date of publication of application: 09.01.2013
(73) Proprietor: Saet S.p.A., 10040 Leini'(TO) (IT)
(72) Inventor: CESANO, Mario, I-13047 San Germano Vercellese (IT); ARDISSONE, Fabio, I-10040 Leinì (IT)
(74) Representative: Bergadano, Mirko
(86) International application number: PCT/IB2011/000461
(87) International publication number: WO 2011/107869

(56) References cited:
- EP-A2- 1 988 179
- WO-A1-2007/082957
- WO-A1-2010/007635
- JP-A- 6 200 326
- US-A- 3 036 824

## Description

### TECHNICAL FIELD

The present invention relates to a method and device of carrying out the localized induction hardening of large, circular mechanical component parts, in particular rings for rolling bearings.

### BACKGROUND ART

A method is known from WO2006/087152, of carrying out the induction hardening of large bearing rings, consisting in using at least two inductors which are rotated, from a first position in which they are arranged adjacent to each other, in opposite directions about the axis of the component part to be hardened, facing the surface thereof on which the heat treatment is to be performed, until they are brought to be adjacent again but on opposite side. Respective cooling showers are associated with the inductors which heat the piece to be hardened.

The described method is both complex to be implemented and has a relatively low execution speed, and in order to limit the tempering of the joint zone between the two half parts of the bearing ring which are hardened by each inductor (a phenomenon altering the quality of the achievable hardening profile), it requires to use a third inductor intended to pre-heat the joint zone while the other inductors are still moving towards the same . JPA06-200362 teaches a different method having the same drawbacks.

### DISCLOSURE OF THE INVENTION

It is the object of the present invention to provide an alternative method of carrying out the heat treatment of induction hardening of rings and other similar large, circular component parts, which is effective and does not need a third inductor to pre-heat the joint zone, and which improves the speed of performing the heat treatment as well as its quality.

The invention thus relates to a method of induction hardening of an annular surface of a circular mechanical component part according to claim 1.

The invention further relates to a device for the induction hardening of an annular surface of a circular, mechanical component part according to claim 8, which is particularly suitable for implementing the method of the invention.

In particular, the device of the invention comprises a plurality of inductors, each of which is provided with separate AC feeding means, cooling means for the mechanical component part, and at least one supporting and centering mandrel for the same. According to the main feature of the invention, the device comprises at least four inductors arranged, in pairs, in tandem with respect to the mandrel; a first pair of inductors comprises a first inductor operatively associated with a first cooling shower and is mounted in a relatively rotating manner with respect to the mandrel about a symmetry axis of the annular surface to be hardened, according to a first predetermined direction; the mandrel is optionally rotational about the symmetry axis of the annular surface to be hardened; and a second pair of inductors comprises a first inductor operatively associated with a second cooling shower and is mounted in a relatively rotating manner with respect to the mandrel about the symmetry axis of the annular surface to be hardened, according to a second predetermined direction opposite to the first; a third and preferably a fourth cooling showers are carried, preferably angularly integral with the mandrel, in opposite radial positions and normally away from the surface to be hardened, and are able to be selectively positioned in front of opposite portions of the surface to be hardened by rotating them on a radial plane with respect to the symmetry axis of the component part to be hardened; moreover, means are provided for moving at least two of the inductors away from the surface to be hardened, during a relative rotation between the inductors and the mandrel.

According to the method of the invention, the following steps are therefore implemented:
- arranging at least four inductors, in pairs, in tandem with respect to the annular surface to be hardened, operatively associating a first inductor of a first pair with a first cooling shower arranged immediately adjacent to a second cooling shower operatively associated with a first inductor of a second pair;
- feeding the inductors while rotating them with respect to one another and to the annular surface to be hardened, moving therewith the showers associated with the first inductors of each pair, so that the second pair of inductors leaves the first pair from the side of the first shower to be repositioned adjacent in tandem to the first pair on the opposite side, while cooling the surface to be hardened, previously heated by the inductors, by means of the showers associated with the first inductors, and optionally but preferably, only during the initial step of reciprocally moving away the inductors, by means of the fourth shower without operating the showers associated with the first inductors;
- ceasing to feed and moving away a second inductor of each pair from the surface to be hardened, which is arranged immediately adjacent to the first inductor, when the second inductors of the first and second pairs are immediately adjacent to each other, while the relative rotation between the first inductors, the corresponding showers and the surface to be hardened continues until the first inductors of the first and second pairs are immediately adjacent to each other;
- ceasing to feed and either subsequently or simultaneously moving the first inductors away from a portion of the surface to be hardened on which they insist at that moment, along with the first and second showers;
- cooling such a surface portion to be hardened with the third shower which is positioned thereon in replacement of at least the last inductor moved away.

Thereby, the hardening rate is more than double as compared to the known art and a more constant hardening profile is achieved, which may be further refined by also rotating the mandrel as necessary, when the latter is rotational; moreover, as the two pairs of inductors are symmetrical, they may be handled by means of a single portal structure, rotating them reciprocally by combining two straight movements perpendicular to each other, which greatly simplifies the device structure and considerably reduces both manufacturing and installation costs.

### BRIEF DESCRIPTION OF THE DRAWINGS

Further features and advantages of the invention will become apparent from the following description of a non-limiting embodiment thereof, merely shown by way of example, with reference to the figures of the accompanying drawings, in which:
- figure 1 shows a schematic front view in elevation and under a three quarters perspective of a hardening device provided according to the invention; and
- figure 2 schematically shows a top plan view of the device in figure 1 in the various steps a)-f) of performing the method according to the invention.

### BEST MODE FOR CARRYING OUT THE INVENTION

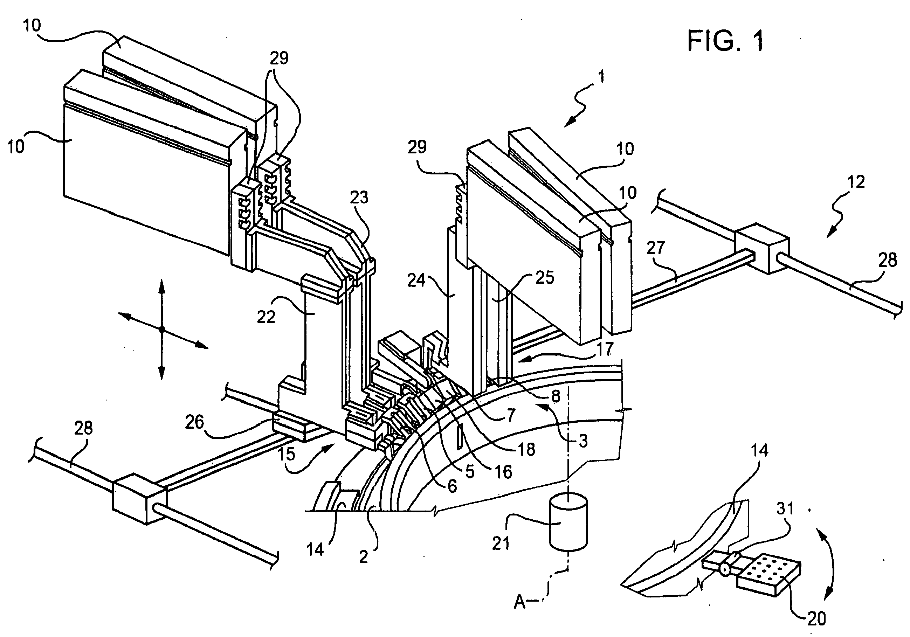

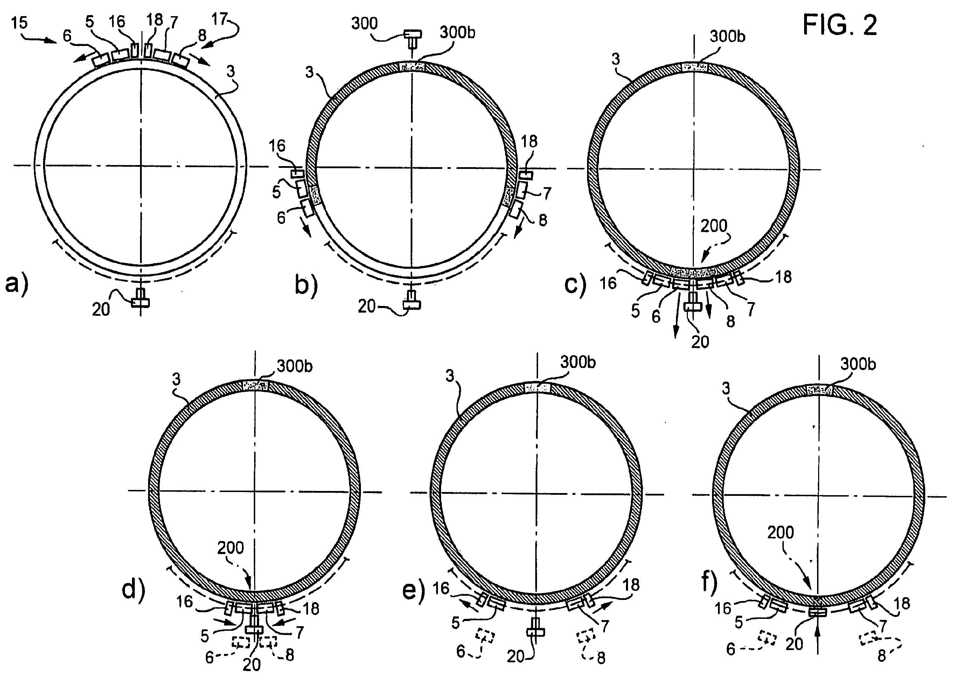

With reference to figures 1 and 2, numeral 1 indicates as a whole a device for the induction hardening of an annular surface 2 of a circular mechanical component part 3, such as for example a bearing ring, having a symmetry axis A.

Device 1 comprises: a plurality of inductors 5, 6, 7, 8, each of which is provided with separate AC feeding means defined by respective converters 10 of known type; cooling means for the mechanical component part 3, indicated by numeral 12 as a whole; and at least one supporting and centering mandrel or spindle 14 for the same.

According to a feature of the invention, device 1 comprises at least four inductors 5-8 arranged, in pairs, in tandem (i.e. in circumferential sequence with respect to axis A) with respect to mandrel 14, and therefore to the component part 3 and to the annular surface 2 to be hardened.

In practice, inductors 5 and 6 form a first pair 15 of inductors, in which inductor 5 is operatively associated with a first shower 16 of the known type, for cooling the component part 3, while inductors 7 and 8 (only partially shown in figure 1) form a second pair 17 of inductors, in which inductor 7 is operatively associated with a second shower 18, of the known type, for cooling the component part 3.

According to the invention, a third cooling shower 20 for the component part 3, known per se, completes the means 12 and is carried, preferably by mandrel 14 angularly integral therewith, in a radial position with respect to axis A, which is the symmetry axis of mandrel 14 as well.

Cooling means 12 preferably also comprise a fourth shower 300 (figure 2b), for example of the same type as shower 20, preferably carried by spindle 14 in a radial position with respect to axis A, opposite to the position of shower 20.

Again according to the invention, in combination with the above description, pairs 15 and 17 of inductors 5,6 and 7,8 are relatively rotationally installed with respect to mandrel 14 about axis A, but are movable in the opposite direction; mandrel 14 is preferably rotationally mounted about axis A as well, and in this case it is provided with driving means 21.

In practice, pair 15 of inductors 5,6 and shower 16 are carried, along with the corresponding converters 10, by respective square-like arms 22,23 which are radially and/or axially movable with respect to mnadrel 14, since they are supported by a handling system on multiple axes 26, known per se. Arm 22 supports inductor 6, while arm 23 integrally supports inductor 5 and shower 16, the latter being arranged on the opposite side of inductor 6.

Conversely, pair 17 of inductors 7,8 and shower 18 are carried, along with the corresponding converters 10, by respective square-like arms 24,25 which are radially and/or axially movable with respect to mandrel 14 as well, since they are in turn supported by a handling system 26 (not shown in figure 1) which is substantially identical to that supporting arms 22,23, and are shaped so that the feeding means 10 of both the inductors 7 and 8 are arranged so as to be staggered in the radial direction with respect to the feeding means 10 of inductors 5,6, which are particularly directed towards the interior of mandrel 14 and axis A, while the feeding means 10 of inductors 5,6 are radially, outwardly directed from mandrel 14, so as to move away from axis A. Arm 25 supports inductor 8, while arm 24 integrally supports inductor 7 and shower 18, the latter being arranged on the opposite side of inductor 8.

According to one aspect of the invention, all the arms 24,25 and 22,23 are carried, e.g. by means of the respective handling systems 26 (of the slide type in the example shown), so as to be movable along the same crossbar 27 which is in turn carried so as to be movable along a pair of side members 28, so as to define a double portal structure therewith, having mandrel 14 at its centre, and thus allowing to move all together the inductors 7,8 and 5,6 with respect to axis A by means of a suitable power mechanization of known type (not described), by rotating the pair 15 and 17 of inductors at the same speed but in opposite direction about axis A, by means of a suitable combination of the two straight movements perpendicular to each other along the crossbar 27 and the side members 28 of inductors 5,6 and 7,8.

Finally, device 1 comprises means for moving away at least two of the inductors 5-8 (in this case, inductors 6 and 8), independently of each other, together or in sequence, from the surface 2 to be hardened during any relative rotation between inductors 5-8 and mandrel 14. Such means are defined by the same handling system 26 and/or by powered slides 29 which allow to lift the inductors 5-8 one at a time or all at once (inductors 5 and 7 always along with the corresponding showers 16 and 18 integral therewith), preferably in a direction perpendicular to surface 2.

Third shower 20 and fourth shower 300 (the latter being optional but preferred) are both arranged in a position normally away from the surface 2 to be hardened, e.g. they are radially, overhangingly mounted in diametrically opposite positions at the base of mandrel 14, and are able to be selectively positioned the shower 20 in front of a portion 200 (figures 2c and 2f) of the surface 2 to be hardened and the shower 300 in front of a portion 300b (figures 2b and 2c) of the surface 2 to be hardened, which portions are in use diametrically opposed to each other, by means of a rotation in a radial plane with respect to the symmetry axis A, and a possible rotation of spindle 14, by means of a powered hinge 31 (shown in figure 1 for shower 20 only), for example, which allows to take them from a horizontal position (as shown in figure 1 for shower 20) to a vertical position (not shown for simplicity).

According to a non secondary aspect of the invention, inductors 5 and 7 integrally associated with showers 16,18 are heating inductors and are each coupled to at least one pre-heating inductor, in this case the inductors 6 and 8; the latter have a greater circumferential length than that of the heating inductors 5 and 7 and are provided with AC feed converters 10 of a higher power than that of respective AC feed converters of the heating inductors.

Figure 2 shows the various configurations from a) to f) which may be taken by device 1 when used for implementing the various steps of the method of induction hardening of the annular surface 2 of the circular mechanical component part 3 according to the invention.

In a first (initial or starting) step of the method of the invention, the inductors 5-8 are arranged, in pairs, in tandem with respect to the annular surface 2, all adjacent to one another and with the inductors 5 and 7 of each pair 15,17 being arranged adjacent and operatively associated with showers 16 and 18; consequently, showers 16,18 are arranged immediately adjacent to each other (figure 2a). In such a step, the inductors 5-8 are substantially placed in the same radial position occupied by shower 300, which is however radially away from surface 2 and therefore does not interfere with the inductors 5-8.

In a second step (figures 2b and 2c), the inductors 5-8 are AC-fed by converters 10 independently of one another, so as to locally heat the component part 3 by induction, while being rotated relatively to one another and with respect to the annular surface 2 to be hardened about axis A, along with the corresponding showers 16,18, at the same speed but in opposite direction, so that the second pair 17 of inductors 7,8 leaves the first pair 15 from the side of the first shower 16 (figure 2b), while the first pair 15 of inductors 5,6 leaves the second pair 17 from the side of shower 18, so as to describe together and from opposite sides the majority of the circumference of the component part 3 to be then repositioned adjacent in tandem on the opposite side, i.e. with inductor 8 being immediately adjacent to inductor 6 and with showers 16,18 being arranged at the opposite ends of the "train" defined by the inductors 5-8, which are circumferentially aligned adjacent to one another (figure 2c). Simultaneously with the movement of inductors 5-8, the showers 16,18 are also immediately operated (e.g. by supplying them with water) or they are operated, according to a variant of the invention, only when they have already been moved away from the surface portion 300b, while the latter is cooled as soon as the inductors 5-8 leave it, by operating shower 300 which is taken in front of it through a radial movement, thus occupying the space left by the inductors 5-8.

During such a step, the whole portion of surface 2 is hardened (gradually shown in hatch) including portion 300b (shown in bold). The hardening is performed by pre-heating surface 2 through inductors 6,8 (shown in dotted portions), until inductors 6,8 travel over the whole surface 2 and stop adjacent to each other so that they both insist on a final portion 200 of surface 2 (figure 2c), diametrically opposite to portion 300b, which portion 200 is pre-heated as well.

In a third step, the feeding of the pre-heating inductors 6,8 (one at a time and in sequence or simultaneously) is ceased and they are simultaneously moved away (together or in the same sequence as before) from the surface 2 to be hardened, while the relative rotation between the other inductors 5,7 with the corresponding showers 16,18 and the surface 2 to be hardened (figure 2d) continues, until the inductors 5,7 are taken to insist on the portion 200 of surface 2 which is thus taken to the optimal hardening temperature.

In a fourth step, the feeding of all the remaining inductors 5,7 is ceased and they are (successively or preferably simultaneously) moved away along with their corresponding showers 16,18 from the portion 200 of surface 2; in particular, the inductors 5,7 may be moved away by means of slides 26 or 29, as when moving away the pre-heating inductors 6,8 from portion 200 or, more simply, by reversing the relative rotation of the pairs of inductors 15,17 with respect to surface 2, by reversing the motion of crossbar 27 and slide systems 26 along the latter, so as to move away the no longer fed inductors 5,7 from portion 200 by circumferentially moving them backwards along surface 2 (figure 2e) along with the inductors 6,8 which, during this movement, however remain in the previously taken position spaced from surface 2.

Thereby, portion 200 is released from the volume of all the inductors 5-8 and, in a fifth and final step, the portion 200 which was heated by the adjacent inductors 5,7 up until a moment before, is abruptly cooled down and thus hardened by operating shower 20 (figure 2f), which is positioned on portion 200 in place of at least the last moved away inductor 5,7.

Inductors 5 and 6 are simultaneously moved away from surface 2, preferably perpendicularly thereto.

Furthermore, by rotating the third shower 20 on a radial plane with respect to the relative rotation axis A between the surface 2 to be hardened and the inductors 5-8, it is positioned on portion 200 of the surface 2 to be hardened as soon as the latter is left by inductors 7,8.

According to a final feature of the method of the invention, as already disclosed, inductors 5,7 are heating inductors and are each coupled to at least one pre-heating inductor, the inductors 6,8 respectively. These are made with a greater circumferential length than that of the heating inductors 5,7, and are fed in use with a higher power than that fed to the heating inductors 5,7.

## Claims

1. A method for induction hardening of an annular surface (2) of a circular mechanical component part (3), comprising the steps of:
- arranging at least four inductors (5-8), in pairs, in tandem with respect to said annular surface to be hardened, associated to a first cooling shower (16) arranged immediately adjacent to a second cooling shower (18) ;
- feeding and simultaneously rotating the inductors (5-8), relatively to each other and with respect to the annular surface (2) to be hardened, moving therewith the showers (16,18);
**characterized in that**, in combination:
i)- the inductors (5-8) are arranged to form a first (15) and a second (17) pair of inductors, each pair formed by a first inductor (5;7) and by a second inductor (6;8) arranged immediately adjacent the first one, wherein the first inductor (5) of the first pair (15) is operatively associated to the first shower (16) and the first inductor (7) of the second pair is operatively associated to the second shower (18);
ii)- the first (15) and second (17) pair of inductors (5-8) are arranged in tandem, immediately adjacent to each other, with the first shower (16) arranged immediately adjacent to the second shower (18);
iii)- the step of feeding and simultaneously relatively rotating the inductors (5-8) is carried out so that the second pair (17) of inductors leaves the first pair (15) from the side of the first shower (16) to be repositioned in tandem adjacent to the first pair (15) on the opposite side, while cooling the surface (2) to be hardened, previously heated by the inductors (5-8), by means of the showers (16,18) associated with the first inductors (5,7);
the method further comprising the steps of:
- ceasing to feed and moving away from the surface to be hardened the second inductor (6,8) of each pair (15,17) when the second inductors (6,8) of the first and second pairs are immediately adjacent to each other, while the relative rotation between the first inductors (5,7), the corresponding showers (16,18) and the surface to be hardened (2) continues until the first inductors (5,7) of the first and second pairs (15,17) are immediately adjacent to each other;
- ceasing to feed and moving the first inductors (5,7), either subsequently or simultaneously with respect on each other, away from a portion (200) of the surface to be hardened on which they insist at that moment, along with the first and second showers (16,18);
- cooling said surface portion (200) to be hardened with a third shower (20) which is positioned thereon in replacement of at least the last inductor (5,7) moved away

2. A method according to claim 1, **characterized in that** said step of feeding and simultaneously rotating the inductors (5-8) relatively to each other and with respect to the annular surface to be hardened along with the corresponding showers (16,18) of each pair is carried out by keeping the annular surface (2) to be hardened stationary and rotating the inductors of the first pair (15) and the first shower (16) in a first predetermined direction about a symmetry axis (A) of the annular surface (2) to be hardened, and rotating the inductors of the second pair (17) and said second shower (18) at the same speed but in opposite direction about said symmetry axis (A) of the annular surface (2) to be hardened.

3. A method according to claim 1 or 2, **characterized in that** during the initial step of rotating while reciprocally moving the inductors of the first pair (15) away from those of the second pair (17), a portion (300b) of the surface (2) to be hardened, which has just been left by the first inductors (5,7), is cooled by means of a fourth shower (300) arranged in a position diametrically opposite to said third shower (20), without actuating the showers (16,18) associated with the first inductors (5,7).

4. A method according to one of the preceding claims, **characterized in that** said third shower (20) is positioned on said portion (200) of the surface to be hardened which has been abandoned by at least the last inductor (5,7) which has been moved away, by rotating it on a radial plane with respect to the relative rotation axis (A) between the surface to the hardened (2) and said inductors (5-8).

5. A method according to one of the preceding claims, **characterized in that** said first inductors (5,7) of each pair (15,17) are heating inductors and are each coupled to at least one pre-heating inductor (6,8).

6. A method according to claim 5, **characterized in that** said pre-heating inductors (6,8) have a greater length measured in the circumferential direction than that of the heating inductors (5,7), and are fed with a higher power than that fed to the heating inductors.

7. A method according to one of the preceding claims, **characterized in that** said means (10) for feeding the inductors (5,6) of the first pair (15) are arranged staggered in the radial direction with respect to the means (10) for feeding the inductors (7,8) of the second pair (17); in particular, the latter are directed towards said axis (A) and the interior of a mandrel (14) supporting the component part (3) to be hardened and said third shower (20), while the means (10) for feeding the inductors (5,6) of the first pair (15) are radially, outwardly directed from the mandrel (14), so as to move away from said axis (A).

8. A device (1) for induction hardening of an annular surface (2) of a circular mechanical component part (3) comprising: a plurality of inductors, each of which is provided with separate AC feeding means (10); cooling means (12) for the mechanical component part; and at least one supporting and centering mandrel (14) for the same; **characterized in that** it comprises at least four inductors (5-8) arranged in pairs, in tandem with respect to said mandrel (14) to form: a first pair (15) of inductors, comprising a first inductor (5) operatively associated with a first cooling shower (16), the first pair (15) of inductors being mounted in a relatively rotating manner with respect to the mandrel (14) about a symmetry axis (A) of the annular surface (2) to be hardened according to a first predetermined direction, the mandrel being optionally rotational about said symmetry axis (A); and a second pair (17) of inductors comprising a first inductor (7) operatively associated with a second cooling shower (18), which second pair (17) of inductors being mounted in a relatively rotating manner with respect to the mandrel (14) about the symmetry axis (A) of the annular surface to be hardened according to a second predetermined direction opposite to the first; a third cooling shower (20) being carried, preferably by the mandrel (14), in a radial position and normally away from the surface (2) to be hardened, and being able to be selectively positioned in front of a portion (200) of the surface to be hardened by rotating it on a radial plane with respect to said symmetry axis (A); means (29) being provided for moving at least two of said inductors (6,8) away from the surface to be hardened (2) during a relative rotation between the inductors (5-8) and the mandrel (14).

9. A device according to claim 8, **characterized in that** said first inductors (5,7) of each pair are heating inductors and are each coupled to at least one pre-heating inductor (6,8); the latter having a greater length measured in the circumferential direction than that of the heating inductors (5,7), and being provided with AC feeding converters (10) of a higher power than that of respective AC feeding converters (10) of the heating inductors (5,7).

10. A device according to claim 8 or 9, **characterized in that** said inductors (5-8) are carried along with said feeding means (10) for the same by respective square-like arms (22-25), which are radially and/or axially movable with respect to said mandrel (14) and are shaped so that the feeding means (10) of the inductors (7,8) of the second pair (17) are arranged staggered in the radial direction with respect to the others; and **in that**, in combination: the square-like arms (24,25 and 22,23) are carried so as to be movable along one and the same crossbar (27) which is in turn carried so as to be movable along a pair of side members (28), so as to define a double portal structure therewith, having the mandrel (14) at its centre, and thus allowing to move all together the inductors (7,8 and 5,6) with respect to said axis (A), by rotating the pair (15,17) of inductors at the same speed but in opposite direction about said axis (A), by means of a suitable combination of the two straight movements perpendicular to each other along the crossbar (27) and the side members (28) of said inductors (5,6 and 7,8).

11. A device according to one of the claims from 8 to 10, **characterized in that** it comprises at least one fourth shower (300), of the same type of said third shower (20) and arranged in a position diametrically opposite to the latter with respect to said mandrel (14), in a radial position and normally away from the surface (2) to be hardened, which fourth shower (300) is able to be selectively arranged in front of a portion (300b) of the surface to be hardened diametrically opposite to the portion (200) of the surface to be hardened concerned in use by the third shower (20).

## Patentansprüche

1. Verfahren zum Induktionshärten einer ringförmigen Fläche (2) eines kreisförmigen mechanischen Bauteils (3), mit den Schritten:
Anordnen von mindestens vier Induktoren (5 - 8) in Paaren und hintereinander bezüglich der zu härtenden ringförmigen Fläche in Zuordnung zu einer ersten Kühldusche (16), die unmittelbar benachbart zu einer zweiten Kühldusche (18) angeordnet ist;
Versorgen der Induktoren (5 - 8) und gleichzeitiges Drehen der Induktoren (5 - 8) relativ zueinander und bezüglich der zu härtenden ringförmigen Fläche (2), wobei die Duschen (16, 18) damit bewegt werden;
**dadurch gekennzeichnet, dass** in Kombination
i) die Induktoren (5 - 8) derart angeordnet sind, dass sie ein erstes (15) und ein zweites (17) Induktorenpaar bilden, wobei jedes durch einen ersten Induktor (5; 7) und einen zweiten Induktor (6; 8) gebildete Paar unmittelbar benachbart zum ersten angeordnet ist, und wobei der erste Induktor (5) des ersten Paars (15) der ersten Dusche (16) betrieblich zugeordnet ist und der erste Induktor (7) des zweiten Paars der zweiten Dusche (18) betrieblich zugeordnet ist;
ii) das erste (15) und das zweite (17) Paar Induktoren (5 - 8) hintereinander unmittelbar benachbart zueinander angeordnet sind, wobei die erste Dusche (16) unmittelbar benachbart zur zweiten Dusche (18) angeordnet ist;
iii) der Schritt des Versorgens der Induktoren (5 - 8) und des gleichzeitigen Drehens der Induktoren (5 - 8) relativ zueinander derart ausgeführt wird, dass das zweite Induktorenpaar (17) das erste Paar (15) von der Seite der ersten Dusche (16) verlässt, um hintereinander benachbart zum ersten Paar (15) auf der gegenüberliegende Seite umpositioniert zu werden, während die zu härtende Fläche (2), die zuvor durch die Induktoren (5 - 8) erwärmt wurde, durch die den ersten Induktoren (5, 7) zugeordneten Duschen (16, 18) gekühlt wird;
wobei das Verfahren ferner die Schritte aufweist:
Beenden der Versorgung zum zweiten Induktor (6, 8) jedes Paars (15, 17) und Wegbewegen des zweiten Induktors (6, 8) jedes Paars (15, 17) von der zu härtenden Fläche, wenn die zweiten Induktoren (6, 8) des ersten und des zweiten Paars unmittelbar benachbart zueinander angeordnet sind, während die relative Drehbewegung zwischen den ersten Induktoren (5, 7), den entsprechenden Duschen (16, 18) und der zu härtenden Fläche (2) fortgesetzt wird, bis die ersten Induktoren (5, 7) des ersten und des zweiten Paars (15, 17) unmittelbar benachbart zueinander angeordnet sind;
Beenden der Versorgung zu den ersten Induktoren (5, 7) und Wegbewegen der ersten Induktoren (5, 7) entweder nacheinander oder gleichzeitig miteinander von einem Abschnitt (200) der zu härtenden Fläche, auf den sie gerade einwirken, zusammen mit der ersten und der zweiten Dusche (16, 18);
Kühlen des zu härtenden Flächenabschnitts (100) durch eine dritte Dusche (20), die dort an Stelle mindestens des zuletzt wegbewegten Induktors (5, 7) angeordnet ist.

2. Verfahren nach Anspruch 1, **dadurch gekennzeichnet, dass** der Schritt Versorgung der Induktoren (5 - 8) und des gleichzeitigen Drehens der Induktoren (5 - 8) relativ zueinander und bezüglich der zu härtenden ringförmigen Fläche zusammen mit den entsprechenden Duschen (16,18) jedes Paars ausgeführt wird, indem die zu härtende ringförmige Fläche (2) stationär gehalten wird und die Induktoren des ersten Paars (15) und die erste Dusche (16) in eine erste vorgegebene Richtung um eine Symmetrieachse (A) der zu härtenden ringförmigen Fläche (2) gedreht werden und die Induktoren des zweiten Paars (17) und die zweite Dusche (18) mit der gleichen Geschwindigkeit, aber in entgegengesetzter Richtung, um die Symmetrieachse (A) der zu härtenden ringförmigen Fläche (2) gedreht werden.

3. Verfahren nach Anspruch 1 oder 2, **dadurch gekennzeichnet, dass** während des anfänglichen Drehschritts, während die Induktoren des ersten Paars (15) und diejenigen des zweiten Paars (17) wechselseitig voneinander weg bewegt werden, ein Abschnitt (300b) der zu härtenden Fläche (2), den die ersten Induktoren (5, 7) gerade freigegeben haben, durch eine vierte Dusche (300) gekühlt wird, die diametral gegenüberliegend der dritten Dusche (20) angeordnet ist, ohne dass die den ersten Induktoren (5, 7) zugeordneten Duschen (16,18) aktiviert werden.

4. Verfahren nach einem der vorangehenden Ansprüche, **dadurch gekennzeichnet, dass** die dritte Dusche (20) auf dem Abschnitt (200) der zu härtenden Fläche angeordnet wird, der durch mindestens den letzten Induktor (5, 7), der wegbewegt wurde, freigegeben wurde, indem sie auf einer radialen Ebene bezüglich der Achse (A) zwischen der zu härtenden Fläche (2) und den Induktoren (5 - 8) gedreht wird.

5. Verfahren nach einem der vorangehenden Ansprüche, **dadurch gekennzeichnet, dass** die ersten Induktoren (5, 7) jedes Paars (15, 17) Heizinduktoren sind und jeweils mit mindestens einem Vorheizinduktor (6, 8) gekoppelt sind.

6. Verfahren nach Anspruch 5, **dadurch gekennzeichnet, dass** die Vorheizinduktoren (6, 8) in der Umfangsrichtung gemessen eine größere Länge haben als die Heizinduktoren (5, 7), und dass den Vorheizinduktoren eine höhere Leistung zugeführt wird als den Heizinduktoren.

7. Verfahren nach einem der vorangehenden Ansprüche, **dadurch gekennzeichnet, dass** die Versorgungen (10) der Induktoren (5, 6) des ersten Paares (15) in der radialen Richtung bezüglich den Versorgungen (10) der Induktoren (7, 8) des zweiten Paars (17) versetzt angeordnet sind; insbesondere sind die Versorgungen der Induktoren (7, 8) zur Achse (A) und zur Innenseite eines Doms (14), der das zu härtende Bauteil (3) und die dritte Dusche (20) hält, hin angeordnet, während die Versorgungen (10) der Induktoren (5, 6) des ersten Paars (15) vom Dorn (14) radial nach außen gerichtet angeordnet sind, so dass sie sich von der Achse (A) weg bewegen.

8. Vorrichtung (1) zum Induktionshärten einer ringförmigen Fläche (2) eines kreisförmigen mechanischen Bauteils (3) mit:
mehreren Induktoren, von denen jeder eine separate Wechselstromversorgung (10) aufweist;
Kühleinrichtungen (12) für das mechanische Bauteil; und
mindestens einem Stütz- und Zentrierdorn (14) für das mechanische Bauteil;
**dadurch gekennzeichnet, dass** die Vorrichtung aufweist:
mindestens vier Induktoren (5 - 8), die in Paaren hintereinander bezüglich des Dorns (14) angeordnet sind, um i) ein erstes Induktorenpaar (15), das einen erste Induktor (5) aufweist, der einer ersten Kühldusche (16) betrieblich zugeordnet ist, wobei das erste Induktorenpaar (15) bezüglich des Dorns (14) um eine Symmetrieachse (A) der zu härtenden ringförmigen Fläche (2) in eine erste vorgegebene Richtung drehbar montiert ist, wobei der Dorn optional um die Symmetrieachse (A) drehbar ist, und ii) ein zweites Induktorenpaar (17) zu bilden, das einen ersten Induktor (7) aufweist, der einer zweiten Kühldusche (18) betrieblich zugeordnet ist, wobei das zweite Induktorenpaar (17) bezüglich des Doms (14) um die Symmetrieachse (A) der zu härtenden ringförmigen Fläche in eine der ersten Richtung entgegengesetzte zweite vorgegebene Richtung drehbar montiert ist;
eine dritte Dusche (20), die vorzugsweise durch den Dorn (14) an einer radialen Position und normalerweise weggerichtet von der zu härtenden Fläche (2) gehalten wird und dazu geeignet ist, selektiv vor einen Abschnitt (200) der zu härtenden Fläche positioniert zu werden, indem sie auf einer radialen Ebene bezüglich der Symmetrieachse (A) gedreht wird; und
eine Einrichtung (29), die dazu geeignet ist, mindestens zwei der Induktoren (6, 8) während einer relativen Drehbewegung zwischen den Induktoren (5 - 8) und dem Dorn (14) von der zu härtenden Fläche (2) wegzubewegen.

9. Vorrichtung nach Anspruch 8, **dadurch gekennzeichnet, dass** die ersten Induktoren (5, 7) jedes Induktorenpaars Heizinduktoren sind und jeweils mit mindestens einem Vorheizinduktor (6, 8) gekoppelt sind, wobei die Vorheizinduktoren in der Umfangsrichtung gemessen eine größere Länge haben als die Heizinduktoren (5,7) und Wechselstromversorgungen (10) mit einer höheren Leistung als diejenige der entsprechenden Wechselstromversorgungen (10) der Heizinduktoren (5,7) aufweisen.

10. Vorrichtung nach Anspruch 8 oder 9, **dadurch gekennzeichnet, dass**
die Induktoren (5 - 8) zusammen mit ihren Versorgungen (10) durch entsprechende rechtwinklige Arme (22 - 25) gehalten werden, die bezüglich des Doms (14) radial und/oder axial beweglich und derart geformt sind, dass die Versorgungen (10) der Induktoren (7, 8) des zweiten Paars (17) in der radialen Richtung bezüglich den anderen versetzt angeordnet sind; und
dadurch, dass in Kombination:
die rechtwinkligen Arme (24, 25 und 22, 23) derart gehalten werden, dass sie entlang der gleichen Querstange (27) beweglich sind, die derart gehalten wird, dass sie entlang eines Paars Seitenelemente (28) beweglich ist, um hiermit eine Doppelportalstruktur mit dem Dorn (14) in ihrer Mitte zu definieren und zu ermöglichen, dass die Induktoren (7, 8 und 5, 7) bezüglich der Achse (A) zusammen bewegt werden, indem die Spulenpaare (15, 17) durch eine geeignete Kombination der beiden geradlinigen Bewegungen senkrecht zueinander entlang der Querstange (27) und der Seitenelemente (28) der Induktoren (5, 6 und 7, 8) mit der gleichen Geschwindigkeit, aber in entgegengesetzte Richtungen um die Achse (A) gedreht werden.

11. Vorrichtung nach einem der Ansprüche 8 bis 10, **dadurch gekennzeichnet, dass** die Vorrichtung mindestens eine vierte Dusche (300) des gleichen Typs wie derjenige der dritten Dusche (20) aufweist, wobei die vierte Dusche an einer Position diametral gegenüberliegend der dritten Dusche bezüglich des Doms (14) an einer radialen Position und normal von der zu härtenden Fläche (2) weg angeordnet ist, wobei die vierte Dusche (300) dazu geeignet ist, selektiv vor einen Abschnitt (300b) der zu härtenden Fläche angeordnet zu werden, der dem Abschnitt (200) der zu härtenden Fläche diametral gegenüberliegt, der im Betrieb durch die dritte Dusche (20) behandelt wird.

## Revendications

1. Procédé de durcissement par induction d'une surface annulaire (2) d'une pièce mécanique circulaire (3), comprenant les étapes consistant à :
- disposer au moins quatre inducteurs (5-8), par paires, en tandem par rapport à ladite surface annulaire à durcir, associée à un premier arroseur de refroidissement (16) disposé de façon immédiatement adjacente à un deuxième arroseur de refroidissement (18) ;
- alimenter et faire tourner simultanément les inducteurs (5-B), les uns par rapport aux autres et par rapport à la surface annulaire (2) à durcir, avec déplacement conjoint des arroseurs (16, 18) ;
**caractérisé en ce que**, en combinaison :
i) les inducteurs (5-8) sont disposés de façon à former des première (15) et seconde (17) paires d'inducteurs, chaque paire étant formée par un premier inducteur (5, 7) et un second inducteur (6 ; 8) disposé de façon immédiatement adjacente au premier inducteur, le premier inducteur (5) de la première paire (15) étant fonctionnellement associé au premier arroseur (16} et le premier inducteur (7) de la seconde paire étant fonctionnellement associé au deuxième arroseur (38) ;
ii) les première (15} et seconde (17) paires d'inducteurs (5-8) étant disposées en tandem, de façon immédiatement adjacente l'une à l'autre, le premier arroseur (16) étant disposé de façon immédiatement adjacente au deuxième arroseur (18) ;
iii) l'étape d'alimentation et de rotation relative et simultanée des inducteurs (5-8) étant réalisée de telle sorte que la seconde paire (17) d'inducteurs quitte la première paire (15) du côté du premier arroseur (16) pour être repositionnée en tandem de façon adjacente à la première paire (15) du côté opposé, tout en refroidissant la surface (2) à durcir, préalablement chauffée par les inducteurs (5-8), au moyen des arroseurs (16, 18) associés aux premiers inducteurs (5, 7) ;
le procédé comprenant en outre les étapes consistant à :
- cesser d'alimenter et écarter de la surface à durcir le second inducteur (6, 8) de chaque paire (15, 17) lorsque les seconds inducteurs (6, 8) des première et seconde paires sont immédiatement adjacents l'un à l'autre, tandis que la rotation relative entre les premiers inducteurs (5, 7), les arroseurs correspondantes (16, 18) et la surface à durcir (2) se poursuit jusqu'à ce que les premiers inducteurs (5, 7) des première et seconde paires (15, 17) soient immédiatement adjacents l'un à l'autre ;
- cesser d'alimenter et écarter les premiers inducteurs (5, 7), successivement ou simultanément l'un par rapport à l'autre, d'une partie (200) de la surface à durcir sur laquelle ils insistent à ce moment, avec les premier et deuxième arroseurs (16, 18) ;
- refroidir ladite partie de surface (200) à durcir avec un troisième arroseur (20) qui est positionné sur celle-ci en remplacement d'au moins le dernier inducteur (5,7) qui a été écarté.

2. Procédé selon la revendication l, **caractérisé en ce que** ladite étape d'alimentation et de rotation simultanée des inducteurs (5-8) les uns par rapport aux autres et par rapport à la surface annulaire à durcir avec les arroseurs correspondants (16, 18) de chaque paire est réalisée avec maintien de la surface annulaire (2) à durcir stationnaire et par rotation des inducteurs de la première paire (15) et du premier arroseur (16) dans un premier sens prédéterminé sur un axe de symétrie (a) de la surface annulaire (2) à durcir, et par rotation des inducteurs de la seconde paire (17) et dudit deuxième arroseur (18) à la même vitesse mais en sens inverse sur ledit axe de symétrie (A) de la surface annulaire (2) à durcir.

3. Procédé selon la revendication 1 ou 2, **caractérisé en ce que**, pendant l'étape initiale de rotation avec écartement réciproque des inducteurs de la première paire (15) de ceux de la seconde paire (17), une partie (300b) de la surface (2) à durcir, qui vient d'être laissée par les premiers inducteurs (5,7), est refroidie au moyen d'un quatrième arroseur (30C) disposé dans une position diamétralement opposée audit troisième arroseur (20), sans actionner les arroseurs (16, 18) associés aux premiers inducteurs (5, 7).

4. Procédé selon l'une quelconque des revendications précédentes, **caractérisé en ce que** ledit troisième arroseur (20) est positionné sur ladite partie (200) de la surface à durcir qui a été abandonnée par au moins le dernier inducteur (5, 7) qui a été éloigné, par rotation dans un plan radial par rapport à l'axe de rotation (A) entre la surface (2) à durcir et lesdits inducteurs (5-8).

5. Procédé selon l'une quelconque des revendications précédentes, **caractérisé en ce que** lesdits premiers inducteurs (5, 7) de chaque paire (15, 17) sont chauffés et sont couplés chacun à au moins un inducteur de préchauffage (6, 8).

6. Procédé selon la revendication 5, **caractérisé en ce que** les inducteurs de préchauffage (6, 8) ont une longueur, mesurée dans la direction circonférentielle, supérieure à celle des inducteurs de chauffage (5, 7), et sont alimentés avec une puissance supérieure à celle fournie aux inducteurs de chauffage.

7. Procédé selon l'une des revendications précédentes, **caractérisé en ce que** lesdits moyens (10)d'alimentation des inducteurs (5, 6) de la première paire (15) sont disposés en quinconce dans la direction radiale par rapport aux moyens (10) d'alimentation des inducteurs (7, 8) de la seconde paire (37) ; en particulier, ces derniers sont dirigés vers ledit axe (A) et l'intérieur d'un mandrin (14) supportant la pièce (3) à durcir et ledit troisième arroseur (20), tandis que les moyens (10) d'alimentation des inducteurs (5, 6) de la première paire (15) sont dirigés radialement vers l'extérieur depuis le mandrin (14), de manière à s'écarter dudit axe (A).

8. Dispositif (1) de durcissement par induction d'une surface annulaire (2) d'une pièce mécanique circulaire (3) comprenant : une pluralité d'inducteurs, qui sont chacun munis de moyens d'alimentation en courant alternatif séparés (10) ; de moyens (12) de refroidissement de pièce mécanique ; et d'au moins un mandrin (14) de support et de centrage de celle-ci ; **caractérisé en ce qu'**il comprend au moins quatre inducteurs (5-8) disposés par paires, en tandem par rapport audit mandrin (14) pour former : une première paire (35) d'inducteurs, comprenant un premier inducteur (5) fonctionnellement associé à un premier arroseur de refroidissement (16), la première paire (15) d'inducteurs étant montée de manière à effectuer une rotation relative par rapport au mandrin (14) sur un axe de symétrie (A) de la surface annulaire (2) à durcir dans un premier sens prédéterminé, le mandrin pouvant facultativement tourner sur ledit axe de symétrie (A) ; et une seconde paire (17) d'inducteurs comprenant un premier inducteur (7) fonctionnellement associé à un deuxième arroseur de refroidissement (16), laquelle seconde paire (17) d'inducteurs est montée de manière à effectuer une rotation relative par rapport au mandrin (14) sur l'axe de symétrie (A) de la surface annulaire à durcir dans un second sens prédéterminé opposé au premier ; un troisième arroseur de refroidissement (20) étant réalisé, de préférence par le mandrin (14), à une position radiale et normalement écartée à de la surface (2) à durcir, et étant apte à être positionné sélectivement en face d'une partie (200) de la surface à durcir par rotation dans un plan radial par rapport audit axe de symétrie (A) ; des moyens (29) étant prévus pour écarter au moins deux desdits inducteurs (6, 8) de la surface (2 à durcir) lors d'une rotation relative entre les inducteurs (5-8) et le mandrin (14).

9. Dispositif selon la revendication 8, **caractérisé en ce que** lesdits premiers inducteurs (5, 7) de chaque paire sont des inducteurs de chauffage et sont couplés chacun à au moins un inducteur de préchauffage (6, 8) ; ce dernier ayant une longueur, mesurée dans la direction circonférentielle, supérieure à celle des inducteurs de chauffage (5, 7) et étant pourvu d'un convertisseur d'alimentation à courant alternatif (10) d'une puissance plus élevée que celle des convertisseurs d'alimentation à courant alternatif (10) respectifs des inducteurs de chauffage (5, 7).

10. Dispositif selon la revendication 8 ou 9, **caractérisé en ce que** lesdits inducteurs (5-8) sont entraînés avec lesdits moyens (10) d'alimentation de ceux-ci par des bras carrés (22-25) respectifs qui sont mobiles radialement et/ou axialement par rapport audit mandrin (14) et sont conformés de telle sorte que les moyens (10) d'alimentation des inducteurs (7, 8) de la seconde paire (17) sont disposés en quinconce dans la direction radiale par rapport aux autres ; et **en ce que**, en combinaison : les bras carrés (24, 25 et 22, 23) sont réalisés de manière à pouvoir se déplacer le long d'une même traverse (27) qui est elle-même supportée de manière mobile le long d'une paire d'éléments latéraux (28), de manière à définir une double structure de portique avec ceux-ci, le mandrin (14) étant placé en son centre, ce qui permet de déplacer tous les inducteurs (7, 8 et 5, 6) par rapport audit axe (A), par rotation de la paire (15, 17) d'inducteurs à la même vitesse mais en sens inverse sur ledit axe (A), au moyen d'une combinaison appropriée de deux mouvements rectilignes perpendiculaires entre eux le long de la traverse (27) et des éléments latéraux (28) desdits inducteurs (5, 6 et 7, 8).

11. Dispositif selon l'une des revendications 8 à 10, **caractérisé en ce qu'**il comprend au moins un quatrième arroseur (300), du même type que ledit troisième arroseur (20) et disposé dans une position diamétralement opposée à celui-ci par rapport audit mandrin (14), dans une position radiale et, normalement écartée de la surface (2) à durcir, lequel quatrième arroseur (300) est apte à être disposé sélectivement en face d'une partie (300b) de la surface à durcir diamétralement opposée à la partie (200) de la surface à durcir concernée en utilisation par le troisième arroseur (20).
